# FASCICULE DE BREVET EUROPEEN

(11) **EP 2 608 641 B1**
(45) Date de publication et mention de la délivrance du brevet: **27.10.2021**
(21) Numéro de dépôt: 12198713.5
(22) Date de dépôt: 20.12.2012
(51) Int. Cl.: H05K 1/11, H05K 1/02

(54) **Dispositif de protection d'un circuit imprimé électronique.**
Schutzvorrichtung für elektronischen gedruckten Schaltkreis
Device for protecting an electronic printed circuit board.

(30) Priorité: 23.12.2011 FR 1162410
(43) Date de publication de la demande: 26.06.2013
(73) Titulaire: Ingenico Group, 75015 Paris (FR)
(72) Inventeur: Mayer, Laurent, 95800 Courdimanche (FR); Nguyen, Frédéric, 95410 Groslay (FR); Sulpice, Pascal, 91300 Massy (FR); Coquelet, Didier, 60540 Puiseux le Hauberger (FR); Robert, Franck, 75011 Paris (FR); Wolff, Caroline, 92150 Suresnes (FR)
(74) Mandataire: Vidon Brevets & Stratégie

(56) Documents cités:
- EP-A2- 0 417 447
- DE-A1-102007 057 948
- GB-A- 2 297 540
- US-A1- 2007 198 860
- US-A1- 2010 024 046
- US-A1- 2010 102 127
- US-A1- 2010 177 487
- US-A1- 2011 055 086

## Description

### 1 DOMAINE DE L'INVENTION

La présente invention se rapporte au domaine de la protection des dispositifs de circuits imprimés. Les circuits imprimés sont utilisés dans de multiples domaines afin de réaliser des circuits électroniques complexes. En particulier, les circuits imprimés sont notamment employés dans de nombreux appareils tels que des terminaux de paiement, des dispositifs d'authentification ou d'identification ou encore des dispositifs de lecture de contenus.

La présente invention se rapporte plus particulièrement à la sécurisation des circuits imprimés électroniques de tels dispositifs, afin de les protéger contre toutes intrusions de tiers malintentionnés.

### 2 ART ANTERIEUR

Les appareils qui intègrent des circuits imprimés, tels que des terminaux de paiement, comprennent de nombreux dispositifs de sécurisation et mettent en œuvre des méthodes permettant d'assurer que les appareils sont utilisés conformément aux usages pour lesquels ils ont été prévus et respectent des normes de sécurité, couramment appelées PCI PED (de l'anglais pour « Pin Entry Device ») qui sont imposées par des organismes de certification.

Par exemple, dans le domaine des terminaux de paiement pour carte de paiement, les fabricants ont développé des solutions de protection du ou des circuit(s) imprimé(s) électronique(s) multicouche(s) ou non (en anglais, PCB pour « *Printed Circuit Board* ») des terminaux de paiements.

Plus précisément, un circuit imprimé est un support, en général une plaque, permettant de relier électriquement un ensemble de composants électroniques entre eux, afin de réaliser un circuit électronique complexe. Cette plaque comprend un assemblage d'une ou plusieurs fines couches de cuivre séparées par un matériau isolant. Les couches de cuivre sont gravées par un procédé chimique pour obtenir un ensemble de pistes, terminées par des pastilles. Le circuit imprimé est souvent recouvert d'une couche de vernis coloré qui protège les pistes de l'oxydation et d'éventuels courts-circuits (prepreg + FR4). Les pistes relient électriquement différentes zones du circuit imprimé. Les pastilles, une fois perforées, établissent une liaison électrique, soit entre les composants soudés à travers le circuit imprimé, soit entre les différentes couches de cuivre (technique dite des « vias »). Dans certains cas, des pastilles non perforées servent à souder des composants montés en surface (CMS).

Malheureusement, des détériorations de circuits imprimés électroniques ont été constatées. Ces détériorations prennent la forme de perçage, de grattage ou tout autre technique intrusive, visant à court-circuiter, couper, espionner, etc., un circuit imprimé.

Par exemple, une détérioration peut correspondre à la coupure d'une piste du circuit imprimé d'un terminal de paiement afin d'annihiler l'envoi d'informations visant à déclencher le mode « attaque » du processeur sécurisé d'un terminal de paiement.

Afin de protéger le circuit imprimé électronique, des solutions de protection ont été développées. Parmi ces solutions de protection, il est notamment connu d'utiliser des plages de cuivre sur circuit imprimé qui reliées entre elles font office d'interrupteur. Ces plages de cuivres peuvent par exemple prendre la forme d'un élément mécanique conducteur permettant de mettre en liaison les deux parties constitutives d'un interrupteur. Ces plages de cuivre peuvent également prendre la forme d'un circuit imprimé flexible protégeant le circuit imprimé à sécuriser en définissant une enceinte sécurisée. En d'autres termes, le circuit imprimé flexible définit un volume de protection ou une « cage quasi-hermétique » empêchant l'intrusion de tout fraudeur ou outil d'intrusion éventuel.

De tels circuits imprimés flexibles comprennent par exemple une sorte de treillis (en anglais, « wire mesh ») avec déclenchement sur niveaux électriques. Il s'agit de fines pistes adjacentes couvrant la totalité de la partie à protéger. Par exemple, une piste peut être reliée à VCC et l'autre à GND, un perçage de ce « wire mesh » peut entrainer la coupure de l'une ou de l'autre liaison, voire d'un court-circuit entre les deux pistes, ce qui sera aussi détecté. De multiples variations de ce dispositif peuvent être utilisées. Les détections peuvent être réalisées sur des niveaux de tensions ou sur la conformité de signaux transitant sur ces pistes.

L'inconvénient de ce type de solution basée sur la mise en œuvre d'une enceinte sécurisée comprenant un circuit imprimé flexible, ou un élément mécanique conducteur, réside dans le fait qu'au niveau de la jonction localisée entre le circuit flexible et le PCB, ou de la jonction localisée entre l'élément mécanique conducteur et le PCB, un espace est laissé libre et permet éventuellement à un fraudeur de s'introduire et de détériorer ou de modifier le bon fonctionnement du circuit imprimé.

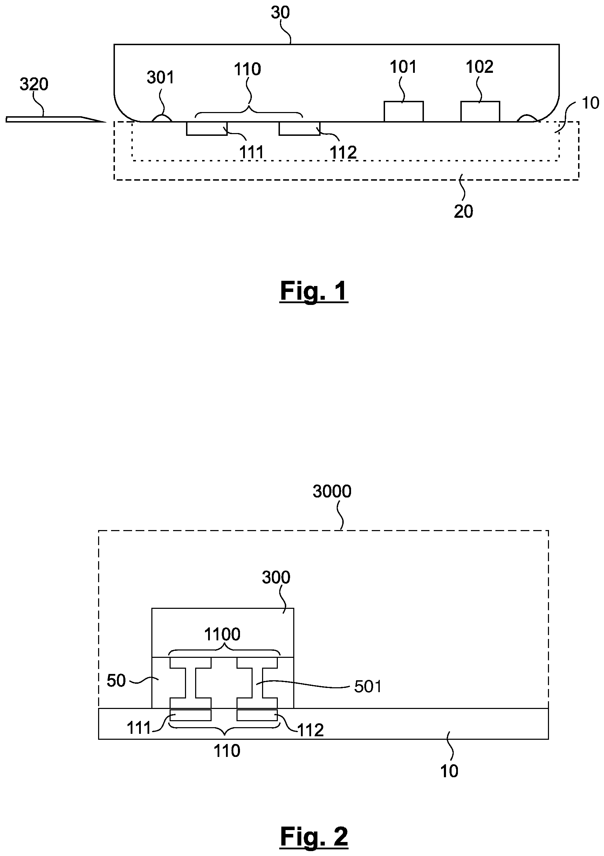

Cette problématique est notamment illustrée par la figure 1, relative à l'utilisation d'une enceinte sécurisée comprenant un circuit imprimé flexible.

En relation avec la figure 1, un circuit imprimé (10) dit « PCB » comprend des composants électroniques (101, 102, etc.). Le circuit imprimé 10 repose sur une structure 20, généralement en plastique (également appelée boîtier interne, par opposition au boîtier externe du terminal), qui permet de monter les composants du terminal (lecteur de carte, clavier, écran, imprimante, etc.).

Comme mentionné précédemment, pour sécuriser certains de ces composants, un circuit flexible (30) est directement soudé à la surface du PCB (10). Comme on le voit sur la figure, cette soudure (301) permet à la fois de fixer le circuit flexible (30) au PCB (10), mais également d'établir un contact entre le circuit flexible (30) avec l'entrée (111) et la sortie (112) d'un interrupteur du PCB (10) pour que le processeur de sécurité puisse recevoir un signal en provenance du circuit flexible. Cette zone de contact est appelée par la suite « zone interrupteur » (110).

Comme schématisé sur la figure 1, un espace libre (qui est certes minime, mais qui est présent) localisé au niveau de la soudure (301), permet cependant à un attaquant d'introduire soit un liquide soit un objet fin (320) ou encore une feuille conductrice entre le PCB et le circuit flexible.

Une telle introduction peut par exemple être réalisée grâce à un laminage préalable du PCB. Il est donc possible, avec à cette technique, de simuler le bon contact localisé au niveau de la « zone interrupteur » entre le circuit flexible et le PCB sans que le processeur de sécurité présent sur le PCB ne puisse s'en apercevoir. Ce faisant les interrupteurs de la « zone interrupteur » sont déconnectés du circuit flexible qui n'est dès lors plus apte à détecter une éventuelle intrusion ou détérioration.

Ainsi, comme on peut le constater, bien que l'utilisation d'un circuit flexible assure un niveau de sécurisation élevé, notamment contre le perçage, il reste certains points de faiblesse notamment localisés au niveau de la zone de contact entre le PCB et l'élément de sécurisation (circuit imprimé flexible ou élément mécanique conducteur) qui doivent être corrigés afin de garantir la sécurisation du circuit imprimé.

A ce jour, les inventeurs n'ont identifié aucune solution simple déjà existante permettant une protection efficace d'un circuit imprimé électronique contre de telles intrusions localisées au niveau de la « zone interrupteur » où le contact entre le PCB et le circuit imprimé flexible est établ.
Le document DE 102007057948 porte sur un dispositif de sécurisation d'une enceinte composée d'un circuit imprimé et un capot lui-même recouvert partiellement par un élément de couverture.

### 3 RESUME DE L'INVENTION

L'invention ne présente pas ces inconvénients de l'art antérieur.

En effet, l'invention concerne un dispositif de protection d'un circuit imprimé électronique comme décrit dans la revendication 1.

Ainsi, l'invention repose sur un dispositif de protection de circuit imprimé particulier permettant de surélever la zone de contact conductrice entre le circuit imprimé et un élément de sécurisation permettant de détecter l'intrusion d'un tiers malveillant.

Le point faible de l'art antérieur localisé à la jonction entre le PCB et l'élément de sécurisation, est donc modifié de la hauteur du plot de surélévation, ce qui empêche un tiers malintentionné de s'introduire au niveau de la jonction entre le PCB et l'élément de sécurisation.

Selon un premier aspect de l'invention, le plot de surélévation comprend sur sa face inférieure, un ensemble de moyens de fixation dont la localisation est centrale au regard du bord de ladite face inférieure.

En d'autres termes, les moyens de fixation du plot de surélévation sont disposés sur la face inférieure du plot de surélévation de sorte à être éloignés d'une distance prédéterminée du bord de la surface inférieure afin d'être localisé le plus près du centre de cette face inférieure. Ainsi, le ou les points de fixation du plot de surélévation avec le PCB sont inaccessibles, ce qui évite toute effraction au niveau de l'interconnexion du plot de surélévation avec le PCB.

Selon une autre caractéristique, le plot de surélévation comprend un anneau de garde, correspondant à une piste métallique entourant ladite zone de contact conductrice.

Ainsi, sur la face supérieure du plot de surélévation, la zone de contact conductrice établissant le contact entre le PCB et l'élément de sécurisation, est protégée par un anneau de garde permettant de détecter un accès latéral à la zone de contact conductrice. L'ajout de cet anneau de garde permet donc de renforcer la sécurisation mis en œuvre par l'utilisation du plot de surélévation.

Selon une autre caractéristique, le plot de surélévation comprend au moins deux parois conductrices verticales disposées entre la face inférieure du plot de surélévation en contact avec le circuit imprimé et la face supérieure du plot de surélévation en contact avec ledit élément de sécurisation, les deux parois conductrices étant réparties latéralement de part et d'autre de ladite zone conductrice.

La présence de ces parois conductrices disposées dans l'épaisseur du plot de surélévation et selon la hauteur de celui-ci permet de protéger, d'un perçage latéral intrusif, le contact vertical établi entre la « zone interrupteur » de la surface supérieure du PCB solidarisée à la surface inférieure du plot de surélévation, et la surface supérieure du plot de surélévation sur laquelle la zone de contact conductrice avec l'élément de sécurisation est disposée.

Plus de deux parois conductrices peuvent évidemment être mises en oeuvre de part et d'autre du contact vertical établi entre la « zone interrupteur » et la « zone de contact conductrice avec l'élément de sécurisation ».

En effet, la multiplication des parois conductrices permet de détecter et de renforcer la protection du PCB contre un perçage latéral du plot de surélévation.

La pluralité de parois conductrices reliées entre elles se comporte alors comme un « wire mesh » vertical établi dans l'épaisseur du plot de surélévation.

L'élément de sécurisation est un circuit imprimé flexible. L'avantage d'un tel élément de sécurisation est de créer un volume sécurisé autour des composants du PCB.

Ce circuit imprimé flexible peut notamment être connecté à la zone de contact conductrice du plot de surélévation par une languette adaptée ou par une extrémité.

Selon une autre variante de réalisation, un autre élément de sécurisation est un élément mécanique conducteur. Cet élément mécanique conducteur est par exemple une pastille carbone, en d'autres termes une pièce, par exemple en plastique chargée et conductrice permettant de fermer l'interrupteur. L'absence de connexion de cet élément conducteur entraîne une détection d'une anomalie de fonctionnement du dispositif de protection du PCB et optionnellement l'émission d'une alerte.

Le circuit imprimé comprend au moins deux plots de surélévation d'au moins deux zones de contact conductrices, lesdits au moins deux plots de surélévation présentant une hauteur distincte.

En effet, il est à noter que le dispositif de protection selon l'invention peut procurer une sécurité renforcée en multipliant les zones de contact conductrices afin de multiplier les zones de surveillance d'une éventuelle intrusion.

En effet, il se peut que les dispositifs existants combinent différents types d'éléments de sécurisation tels que le circuit imprimé flexible et l'élément élément mécanique conducteur précédemment mentionnés.

Dans ce cas, il est nécessaire d'utiliser autant de plots de surélévation qu'il existe par exemple de languettes de circuit imprimé flexible ou de d'éléments mécaniques conducteurs. Afin de renforcer la sécurité de tels dispositifs de protection utilisant une multiplicité de plots de surélévation, il est proposé d'utiliser des plots de hauteurs différentes.

Ainsi, un tiers malveillant qui parviendrait peut-être à contourner un plot de surélévation ne pourrait effectuer les mêmes opérations de détournement du fait du changement de hauteur du plot de surélévation utilisé.

En outre, la variation de hauteur des plots de surélévation utilisés permet par exemple d'adapter la sécurisation du PCB à son environnement, notamment la forme du boîtier, ou encore la disposition des composants sur la surface supérieure du PCB.

Par ailleurs, il est également possible de multiplier les plots de surélévation afin de permettre d'autres fonctionnalités, par exemple des fonctionnalités de contre-mesure, nécessitant un contact déporté avec le PCB.

Selon une autre forme, l'invention se rapporte également à un terminal de paiement comprenant un dispositif de protection de circuit imprimé tel que décrit précédemment.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà commenté, illustre la problématique associée au système de protection d'un circuit imprimé de l'art antérieur mettant en œuvre une enceinte sécurisée ;
- la figure 2 représente une vue de côté d'un plot de surélévation selon l'invention ;
- les figures 3A et 3B représentent respectivement une vue de dessus et une vue en coupe du plot de surélévation selon un mode de réalisation particulier de l'invention ;
- les figures 4A et 4B représentent respectivement une vue de dessous du plot de surélévation dont la face inférieure comprend des moyens de fixation sur le PCB, ainsi qu'une vue en perspective de l'assemblage du plot de surélévation et du PCB ;
- la figure 5 représente les différents types d'éléments de sécurisation du dispositif de protection de circuit imprimé selon l'invention;
- la figure 6 schématise un terminal de paiement selon l'invention.

### 5 DESCRIPTION DETAILLEE DE L'INVENTION

### 5.1 Rappel du principe de l'invention

L'invention, dans au moins un mode de réalisation, propose de pallier le point faible de l'art antérieur à savoir la vulnérabilité de la jonction entre un élément de sécurisation détectant les intrusions dans un volume sécurisé du circuit imprimé appelé par la suite PCB.

En effet, traditionnellement la zone de contact conductrice entre l'élément de sécurisation et le PCB est « affleurante » à la surface supérieure du PCB, et par là même accessible.

Au contraire, dans un mode de réalisation de l'invention, cette zone est surélevée d'une hauteur correspondant à la hauteur d'un plot de surélévation solidarisé au PCB en recouvrant totalement la « zone interrupteur » de la surface supérieure de celui-ci.

Ainsi, la zone de contact conductrice entre le PCB et l'élément de sécurisation est délocalisée en un emplacement non accessible par un individu qui tenterait d'introduire un objet ou un liquide sur cette surface en vue de réaliser un court-circuit.

### 5.2 Description d'un mode de réalisation d'un dispositif de protection selon l'invention

### Structure du dispositif de protection

On présente en relation avec la figure 2, la structure du dispositif de protection d'un circuit imprimé.

De même que pour la figure 1 relative à l'art antérieur, le circuit imprimé (10) dit « PCB » comprend des composants électroniques (101, 102, etc.) non représentés. Le circuit imprimé 10 repose sur une structure 20 (non reproduite au regard de la figure 1, généralement en plastique (également appelée boîtier interne, par opposition au boîtier externe du terminal), qui permet de monter les composants du terminal (lecteur de carte, clavier, écran, imprimante, etc.).

Comme mentionné précédemment, pour sécuriser certains de ces composants, un élément de sécurisation (300) (qui est un circuit imprimé flexible et optionnellement un autre élément de sécurisation étant un élément mécanique conducteur) est utilisé et connecté au PCB (10).

A la différence de la figure 1 relative à l'art antérieur qui prévoyait qui prévoyait une connexion de l'élément de sécurisation par une soudure (301), l'invention propose d'utiliser un plot de surélévation (50) permettant à la fois de délocaliser la zone de contact conductrice entre l'élément de sécurisation (300) et l'élément le PCB.

En effet, comme représenté sur la figure 2, le plot de surélévation est connecté à la « zone interrupteur » (110) du PCB et comprend un contact vertical (501) établi entre la «zone interrupteur» de la surface supérieure du PCB solidarisée à la surface inférieure du plot de surélévation, et la surface supérieure du plot de surélévation sur laquelle la zone de contact conductrice avec l'élément de sécurisation est disposée.

Ainsi, la zone de contact conductrice (1100) entre l'élément de sécurisation permettant de détecter une intrusion est surélevée par rapport à la surface supérieure du PCB d'une distance égale à la hauteur du plot de surélévation.

La zone de contact conductrice est dès lors protégée par l'enceinte sécurisée 3000 établie par l'élément de sécurisation.

### Moyens de fixation du plot de surélévation

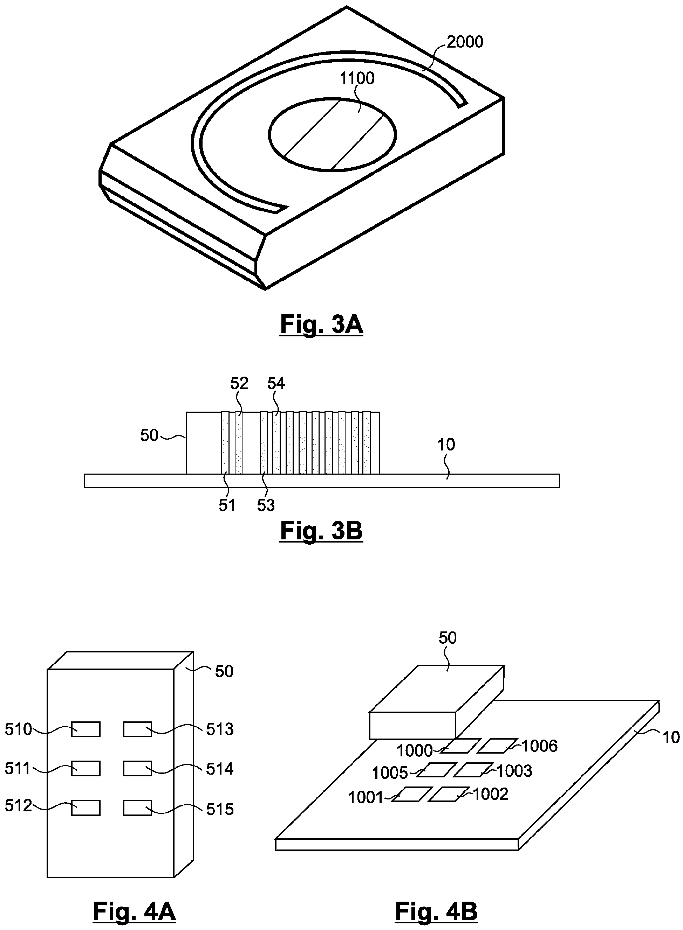

On présente en relation respectivement avec les figures 4A et 4B une vue de dessous (figure 4A) du plot de surélévation (50) dont la face inférieure comprend des moyens de fixation (510, 511, 512, 513, 514, 515) sur le PCB (10), ainsi qu'une vue en perspective de l'assemblage du plot de surélévation et du PCB.

En effet, le plot de surélévation comprend par exemple selon ce mode de réalisation deux plages de contacts (510, 511, 512, et 513, 514, 515) destinées à être respectivement soudées aux plages « interrupteur » (1001, 1005, 1006, et 1002, 1003, 1004) du PCB (10).

Avantageusement, la localisation de ces plages est centrale au regard du plot de surélévation (50), en d'autres termes ces plages sont éloignées d'une distance prédéterminée de sécurité des bords de la face inférieure du plot de surélévation de sorte à éviter tout tentative d'intrusion visant à entrer en contact avec ces plages.

Par exemple la distance minimum de sécurité à respecter est par exemple de l'ordre de 2 mm.

Ainsi, la « zone interrupteur » (110) de la face supérieure du PCB est entièrement recouverte par le plot de surélévation et inaccessible pour un tiers malintentionné.

Le plot de surélévation joue le rôle d'élévateur de la zone interrupteur (110) vers la zone de contact conductrice (1100) surélevée de la hauteur du plot de surélévation (50).

### 5.3 Variantes de réalisation

### Améliorations du dispositif de protection

Afin de renforcer la protection procurée par le plot de surélévation proposé selon l'invention, plusieurs éléments additionnels peuvent être ajoutés au sein du plot de surélévation (50).

Ces éléments sont notamment présentés en relation avec les figures 3A et 3B.

Ainsi, en relation avec la figure 3A, le plot de surélévation comprend un anneau de garde (2000), correspondant à une piste métallique entourant la zone de contact conductrice (1100) surélevée de la hauteur du plot de surélévation. Ainsi, sur la face supérieure du plot de surélévation, la zone de contact conductrice (1100) établissant le contact entre le PCB (10) et l'élément de sécurisation (300) est protégée par un anneau de garde (2000) permettant de détecter un accès latéral à la zone de contact conductrice.

L'ajout de cet anneau de garde permet donc de renforcer la sécurisation mis en œuvre par l'utilisation du plot de surélévation.

En relation avec la figure 3B, le plot de surélévation peut également comprendre au moins deux parois conductrices verticales (51, 52, 53, 54) s'étendant entre la face inférieure du plot de surélévation (50) en contact avec le PCB (10) et la face supérieure du plot de surélévation en contact avec ledit élément de sécurisation, les deux parois conductrices étant par exemple réparties latéralement de part et d'autre de ladite zone conductrice.

La présence de ces parois conductrices disposées dans l'épaisseur du plot de surélévation et selon la hauteur de celui-ci permet de protéger, d'un perçage latéral intrusif, le contact vertical établi entre la « zone interrupteur » de la surface supérieure du PCB (10) solidarisée à la surface inférieure du plot de surélévation (50), et la surface supérieure du plot de surélévation (50) sur laquelle la zone de contact conductrice (1100) avec l'élément de sécurisation est disposée.

Plus de deux parois conductrices peuvent évidemment être mises en oeuvre de part et d'autre du contact vertical (501) établi entre la «zone interrupteur » (110) et la « zone de contact conductrice » (1100) avec l'élément de sécurisation.

En effet, la multiplication des parois conductrices permet de détecter et de renforcer la protection du PCB contre un perçage latéral du plot de surélévation.

La pluralité de parois conductrices reliées entre elles se comporte alors comme un « wire mesh » vertical établit dans l'épaisseur du plot de surélévation.

Une combinaison de l'anneau de garde (2000) et des parois conductrices peut évidemment être mise en œuvre au sein du plot de surélévation afin d'augmenter le niveau de protection procuré par celui-ci.

### Type d'élément de sécurisation

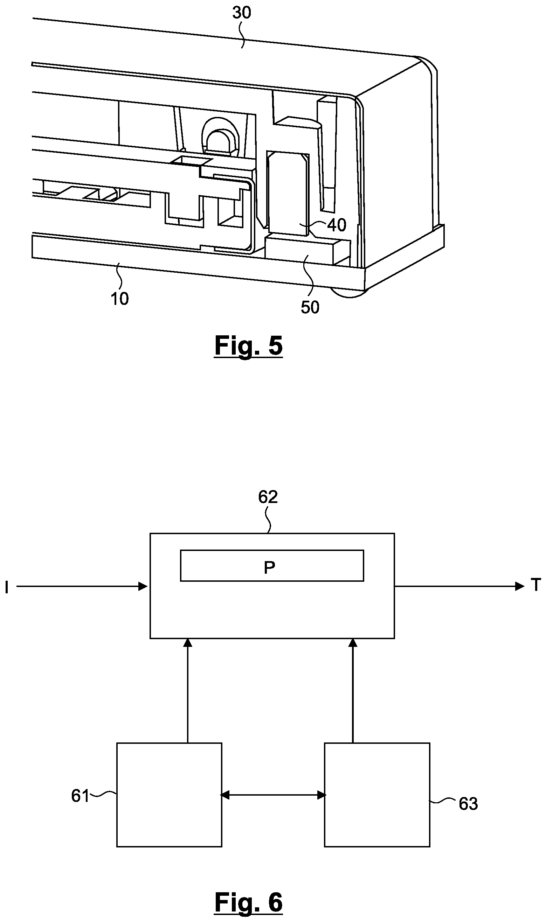

En relation avec la figure 5, on présente un dispositif de protection présentant deux types d'élément de sécurisation.

En effet, l'élément de sécurisation est un circuit imprimé flexible (30) et l'autre élément de sécurisation est un élément mécanique conducteur (40).

Dans le cas où seulement un circuit imprimé flexible est utilisé, il y a alors création d'un volume sécurisé autour des composants du PCB.

Le circuit imprimé flexible peut notamment être connecté à la zone de contact conductrice du plot de surélévation par une languette adaptée (non représentée) ou par une extrémité (non représenté).

Selon une autre variante de réalisation, lorsque l'autre élément de sécurisation est un élément mécanique conducteur, il s'agit par exemple d'une pastille carbone.

L'absence de connexion de cet élément conducteur sur le plot de surélévation entraîne une détection d'une anomalie de fonctionnement du dispositif de protection du PCB et optionnellement l'émission d'une alerte et/ou la mise en œuvre de mesures de sécurisation (effacement de la mémoire sécurisée par exemple).

### Terminal de paiement

On présente, en relation avec la figure 6, un mode de réalisation d'un terminal de paiement selon l'invention.

Un tel terminal comprend une mémoire 61 comprend une mémoire tampon, une unité de traitement 62, équipée par exemple d'un microprocesseur P, et pilotée par le programme d'ordinateur 63, mettant en œuvre le procédé de protection selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée au moins une information I, telle que des identifiants de zones de localisation. Le microprocesseur de l'unité de traitement 62 met en œuvre les étapes du procédé de protection décrit précédemment, selon les instructions du programme d'ordinateur 63, pour délivrer une information traitée T, telle que la détection d'une attaque entraînant la suppression des données protégées. Pour cela, le terminal comprend, outre la mémoire tampon 61, au moins un dispositif de protection d'un circuit imprimé électronique du terminal de paiement, ledit dispositif de protection comprenant au moins une zone de contact conductrice entre le circuit imprimé et un élément de sécurisation du circuit imprimé et au moins un plot de surélévation de la zone de contact conductrice.

Ce dispositif de protection est piloté par le microprocesseur de l'unité de traitement 62.

## Revendications

1. Dispositif de protection d'un circuit imprimé électronique (10) comprenant au moins deux zones de contact conductrices (110) entre ledit circuit imprimé (10) et au moins un élément de sécurisation (30) dudit circuit imprimé, et **caractérisé en ce que** ledit au moins un élément de sécurisation est un circuit imprimé flexible, et **en ce que** ledit circuit imprimé comprend en outre au moins deux plots de surélévation (50) desdites au moins deux zones de contact conductrices, lesdits au moins deux plots présentant une hauteur distincte, ledit élément de sécurisation (30) entrant en contact avec lesdites zones de contact conductrices (110) dudit circuit imprimé par l'intermédiaire d'une zone de contact conductrice desdits plots de surélévation (50).

2. Dispositif de protection d'un circuit imprimé selon la revendication 1, **caractérisé en ce que** au moins un desdits plots de surélévation comprend sur sa face inférieure un ensemble de moyens de fixation dont la localisation est centrale au regard du bord de ladite face inférieure.

3. Dispositif de protection d'un circuit imprimé selon l'une quelconque des revendications 1 et 2, **caractérisé en ce que** au moins un desdits plots de surélévation comprend un anneau de garde (2000), correspondant à une piste métallique entourant ladite zone de contact conductrice.

4. Dispositif de protection d'un circuit imprimé selon l'une quelconque des revendications précédentes, **caractérisé en ce que** au moins un desdits plots de surélévation comprend au moins deux parois conductrices verticales (51, 52, 53, 54) disposées entre ladite face inférieure dudit au moins un plot de surélévation en contact avec le circuit imprimé et ladite face supérieure dudit au moins un plot de surélévation en contact avec ledit élément de sécurisation, lesdites au moins deux parois conductrices (51, 52, 53, 54) étant répartis latéralement de part et d'autre de ladite zone conductrice.

5. Dispositif de protection d'un circuit imprimé selon l'une quelconque des revendications précédentes, **caractérisé en ce qu'**il comprend au moins un autre élément de sécurisation, ledit au moins un autre élément de sécurisation étant un élément mécanique conducteur (40).

6. Terminal de paiement, **caractérisé en ce qu'**il comprend un dispositif de protection selon l'une des revendications précédentes.

## Patentansprüche

1. Schutzvorrichtung einer elektronischen Leiterplatte (10), umfassend mindestens zwei leitende Kontaktbereiche (110) zwischen der Leiterplatte (10) und mindestens einem Sicherungselement (30) der Leiterplatte, und **dadurch gekennzeichnet, dass** das mindestens eine Sicherungselement eine flexible Leiterplatte ist, und dadurch, dass die Leiterplatte ferner mindestens zwei Kontaktstellen zur Erhöhung (50) der mindestens zwei leitenden Kontaktbereiche aufweist, wobei die mindestens zwei Kontaktstellen eine unterschiedliche Höhe aufweisen, wobei das Sicherungselement (30) mit den leitenden Kontaktbereichen (110) der Leiterplatte über einen leitenden Kontaktbereich der Kontaktstellen zur Erhöhung (50) in Kontakt tritt.

2. Schutzvorrichtung einer elektronischen Leiterplatte nach Anspruch 1, **dadurch gekennzeichnet, dass** mindestens eine der Kontaktstellen zur Erhöhung auf ihrer Unterseite eine Anordnung von Befestigungsmitteln aufweist, deren Lage gegenüber dem Rand der Unterseite zentral ist.

3. Schutzvorrichtung einer elektronischen Leiterplatte nach einem der Ansprüche 1 und 2, **dadurch gekennzeichnet, dass** mindestens eine der Kontaktstellen zur Erhöhung einen Schutzring (2000) aufweist, der einer Metallbahn entspricht, die den leitenden Kontaktbereich umgibt.

4. Schutzvorrichtung einer elektronischen Leiterplatte nach einem der vorhergehenden Ansprüche, **dadurch gekennzeichnet, dass** mindestens eine der Kontaktstellen zur Erhöhung mindestens zwei senkrechte leitende Wände (51, 52, 53, 54) aufweist, die zwischen der Unterseite der mindestens einen Kontaktstelle zur Erhöhung in Kontakt mit der Leiterplatte und der Oberseite der mindestens einen Kontaktstelle zur Erhöhung in Kontakt mit dem Sicherungselement angeordnet sind, wobei die mindestens zwei leitenden Wände (51, 52, 53, 54) seitlich beiderseits des leitenden Bereichs verteilt sind.

5. Schutzvorrichtung einer elektronischen Leiterplatte nach einem der vorhergehenden Ansprüche, **dadurch gekennzeichnet, dass** sie mindestens ein anderes Sicherungselement aufweist, wobei das mindestens eine andere Sicherungselement ein leitendes mechanisches Element (40) ist.

6. Zahlungsendgerät, umfassend ein Gehäuse, **dadurch gekennzeichnet, dass** es eine Schutzvorrichtung nach einem der vorhergehenden Ansprüche aufweist.

## Claims

1. Device for protecting an electronic printed circuit board (10) comprising at least two zones of conductive contact (110) between said printed circuit board (10) and at least one element for securing (30) the printed circuit board, and **characterized in that** said at least one securing element is a flexible printed circuit board, and **in that** said printed circuit board also comprises at least two elevating pads (50) for elevating said at least two zones of conductive contact, said at least two elevating pads having a distinct height, said element for securing (30) coming into contact with said zones of conductive contact (110) of said printed circuit board by means of a conductive contact zone of said elevating pads (50).

2. Device for protecting a printed circuit according to claim 1, **characterized in that** at least one of said elevating pads comprises, on its lower face, a set of means for fastening, the location of which is central with respect to the edge of said lower face.

3. Device for protecting a printed circuit according to any one of the claims 1 and 2, **characterized in that** at least one of said elevating pads comprises a guard ring (2000) corresponding to a metal track surrounding said conductive contact zone.

4. Device for protecting a printed circuit according to any one of the above claims, **characterized in that** at least one of said elevating pads comprises at least two vertical conductive walls (51, 52, 53, 54) laid out between said lower face of said elevating pad in contact with the printed circuit board and said upper face of said elevating pad in contact with said securing element, said at least two conductive walls (51, 52, 53, 54) being distributed laterally on either side of said conductive zone.

5. Device for protecting a printed circuit according to any one of the above claims, **characterized in that** it comprises at least one other securing element, said at least one other securing element being a conductive mechanical element (40).

6. Payment terminal **characterized in that** it comprises a device for protecting according to any one of the above claims.
